(19) Europäisches Patentamt
European Patent Office
Office européen des brevets

(11) Numéro de publication : 0 358 584 B1

(12) # FASCICULE DE BREVET EUROPEEN

(45) Date de publication du fascicule du brevet : **16.09.92 Bulletin 92/38**

(51) Int. Cl.$^5$ : **C08G 77/38**

(21) Numéro de dépôt : **89420329.8**

(22) Date de dépôt : **08.09.89**

(54) **Diorganopolysiloxane à fonction benzalmalonate.**

(30) Priorité : **09.09.88 FR 8812016**

(43) Date de publication de la demande : **14.03.90 Bulletin 90/11**

(45) Mention de la délivrance du brevet : **16.09.92 Bulletin 92/38**

(84) Etats contractants désignés : **AT BE CH DE ES FR GB GR IT LI LU NL SE**

(56) Documents cités :
**FR-A- 2 454 336**
**US-A- 4 405 469**

(73) Titulaire : **RHONE-POULENC CHIMIE**
**25, quai Paul Doumer**
**F-92408 Courbevoie Cédex (FR)**

(72) Inventeur : **Richard, Hervé**
**48, rue de l'Hermitage**
**F-75020 Paris (FR)**
Inventeur : **Canivenc, Edith**
**53, rue du Colombier**
**F-69007 Lyon (FR)**
Inventeur : **Forestier, Serge**
**16, allée Ferdinand Buisson**
**F-77410 Claye-Souilly (FR)**
Inventeur : **Gay, Michel**
**10, rue Henri Rolland**
**F-69100 Villeurbanne (FR)**
Inventeur : **Lang, Gérard**
**44, avenue Lacour**
**F-95210 Saint-Gratien (FR)**

(74) Mandataire : **Fabre, Madeleine-France et al**
**RHONE-POULENC CHIMIE Direction des Brevets Secteur Spécialités Chimiques 25, quai Paul-Doumer**
**F-92408 Courbevoie Cédex (FR)**

**EP 0 358 584 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un diorganopolysiloxane à fonction benzalmalonate ; elle est le fruit d'une coopération entre les Sociétés l'OREAL et RHONE-POULENC CHIMIE.

Il est déjà connu de modifier, dans la chaîne et/ou en bout de chaîne, par des groupements organiques fonctionnels divers, des diorganopolysiloxanes dans le but de conférer à ces polymères silicones, des propriétés spécifiques.

Un moyen commode d'introduire ces groupements organiques fonctionnels est d'effectuer une réaction d'hydrosilylation en présence d'une quantité catalytiquement efficace d'un catalyseur au platine d'un diorganopolysiloxane porteur d'au moins un groupement SiH sur un composé organique porteur d'une insaturation alcénique.

Comme documents illustrant cet art antérieur on peut par exemple citer :

- les brevets US-A-2 970 150 et US-A-4 160 775 décrivant l'addition d'alcool allylique ou méthallylique sur un silane ou diorganopolysiloxane porteur d'au moins un groupement SiH,
- les brevets US-A-3 767 690 et US-A4 503 208 décrivant des diorganopolysiloxanes porteurs de groupes à fonction acrylate ou méthacrylate,
- le brevet US-A-4 640 967 décrivant des diorganopolysiloxanes porteurs de groupement époxy et/ou acrylate ou méthacrylate et leur réalisation comme composition de revêtement de fibres optiques,
- le brevet EP-A-0 088 842 décrivant des diorganopolysiloxanes porteurs de groupements benzophénone.

La présente invention a précisément pour objet de proposer de nouveaux diorganopolysiloxanes modifiés par des groupements organiques fonctionnels qui présentent d'une part un indice de réfraction élevé en vue de leur incorporation dans des compositions de revêtement pour fibres optiques et, d'autre part, conviennent comme lubrifiant des matières plastiques en particulier du PVC.

Les brevets US-A-4 316 033 et 4 373 060 décrivent des alcoxysilanes porteur de fonction benzotriazole F. Ces brevets décrivent la cohydrolyse de ces silanes fonctionnels avec de la silice colloidale et un alkyltrialcoxysilane en vue d'obtenir une résine silicone c'est-à-dire un polymère comportant essentiellement des motifs $Q(SiO_2)$, $T(CH_3SiO_{1,5})$ et moins de 2 % molaire de motifs $FSiO_{1,5}$. Cette résine silicone, durcie, est utilisée comme revêtement de surfaces en matière plastique.

Les brevets US-A-4 404 257, US-A-4 242 381 et US-A-4 242 383 décrivent des compositions de polycarbonates contenant des dérivés organiques de benzylidènemalonate.

Toutefois, ces brevets n'enseignent pas la préparation de diorganopolysiloxanes linéaires ou cycliques à fonction benzylidènemalonate.

La présente invention concerne en effet un polymère diorganopolysiloxane modifié choisi parmi ceux de formule :

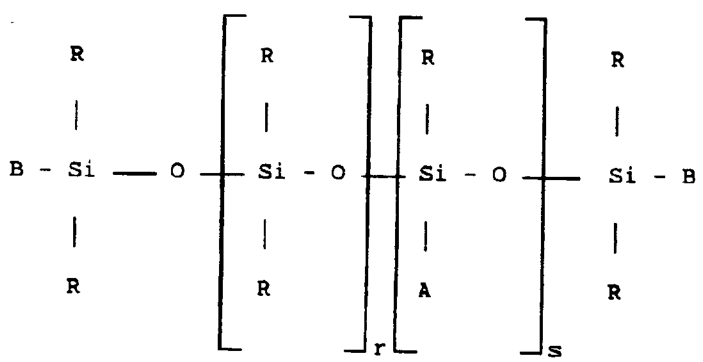

(1)

dans laquelle les symboles :

- R, identiques ou différents, sont choisis parmi les radicaux alkyle en $C_1$-$C_{10}$, phényle et trifluoro-3,3,3 propyle, au moins 80 % en nombre des radicaux R étant méthyle,
- B, identiques ou différents, sont choisis parmi les radicaux R et le radical A,
- r est un nombre entier choisi entre 0 et 200 inclusivement,
- s est un nombre entier choisi entre 0 et 50 inclusivement et si s est O, au moins un des deux symboles B est A,

et de formule :

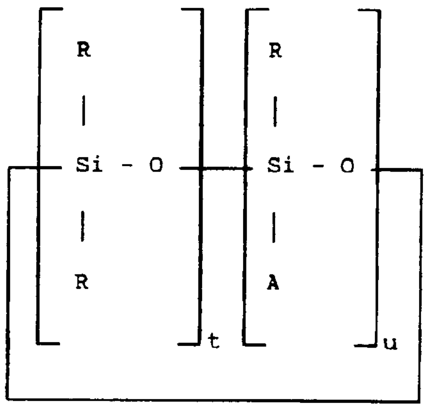

(2)

dans laquelle :

- R a la même signification qu'à la formule (1),
- u est un nombre entier compris entre 1 et 20 inclus et
- t est un nombre entier entre 0 et 20 inclus,
- t + u est égal ou supérieur à 3.

formules dans lesquelles A est un radical de formule

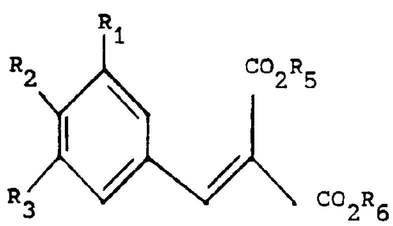

(3)

dans laquelle :

- $R_1$ et $R_2$ sont choisis parmi un atome d'hydrogène, un radical hydroxyle, un radical triméthylsiloxy, un radical alkyle en $C_1$-$C_6$, un radical alcoxy en $C_1$-$C_6$, et un groupement divalent Y :

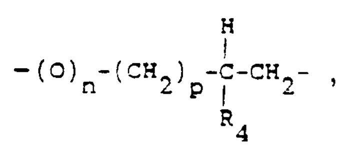

fixé au noyau benzénique par la terminaison $(O)_n$ et dans lequel :

- n est 0 ou 1,
- p est un nombre entier compris entre 1 et 10 inclus, de préférence entre 1 et 4, et $R_4$ est choisi parmi un atome d'hydrogène et un radical alkyle en $C_1$-$C_4$, l'un des deux radicaux $R_1$ et $R_2$ représentant nécessairement le groupement Y,
- $R_3$ représente un atome d'hydrogène, un radical alkyle en $C_1$-$C_6$ et un radical alcoxy en $C_1$-$C_6$,
- $R_5$ et $R_6$, identiques ou différents, représentent un radical alkyle en $C_1$-$C_8$.

Dans les formules ci-dessus les radicaux alkyle et alcoxy peuvent être linéaires ou ramifiés.

Parmi les radicaux alcoxy en $C_1$-$C_6$ à chaîne droite ou ramifiée, on peut citer par exemple les radicaux méthoxy, éthoxy, n-propoxy, isopropoxy, n-butoxy, isobutoxy, tert.-butoxy, n-amyloxy, isoamyloxy, néopentyloxy et n-hexyloxy.

Parmi les radicaux alkyle en $C_1$-$C_6$ à chaîne droite ou ramifiée, on peut citer plus particulièrement les radicaux méthyle, éthyle, n-propyle, isopropyle, n-butyle, isobutyle, tert.-butyle, n-amyle, isoamyle, néopentyle et n-hexyle, et parmi les radicaux alkyle en $C_1$-$C_8$, les radicaux précédents ainsi que les radicaux n-heptyle, n-octyle et 2-éthylhexyle.

Les radicaux R alkyle préférés sont méthyle, éthyle, propyle, n-butyle, n-octyle et éthyl-2 hexyle. De préférence au moins 80 % en nombre des radicaux R sont méthyle.

On préfère plus particulièrement les polymères statistiques où à blocs de formule (1) et (2) présentant au moins l'une des caractéristiques suivantes :

- R est méthyle
- B est méthyle
- $R_1$ est H ou Y
- $R_2$ est Y, méthoxy ou butoxy
- $R_3$ est H ou méthoxy
- p = 1
- $R_4$ est H ou méthyle
- $R_5$ et $R_6$ sont éthyle ou 2-éthylhexyle
- r est compris entre 5 et 20 inclus
- s est compris entre 2 et 15 inclus
- t + u est comprise entre 3 et 10 inclus

Pour préparer les polymères de formules (1) et (2), on peut par exemple partir du polymère correspondant dans lequel tous les radicaux A sont des atomes d'hydrogène.

Ce polymère est dénommé par la suite polymère à SiH ; les groupes SiH peuvent être présents dans la chaîne et/ou aux extrémités de chaîne. Ces polymères à SiH sont des produits bien connus dans l'industrie des silicones et sont généralement disponibles dans le commerce.

Ils sont par exemple décrits dans les brevets américains US-A-3 220 972, US-A-3 436 366, US-A-3 697 473 et US-A-4 340 709.

Ce polymère à SiH peut être donc choisi parmi ceux de formule :

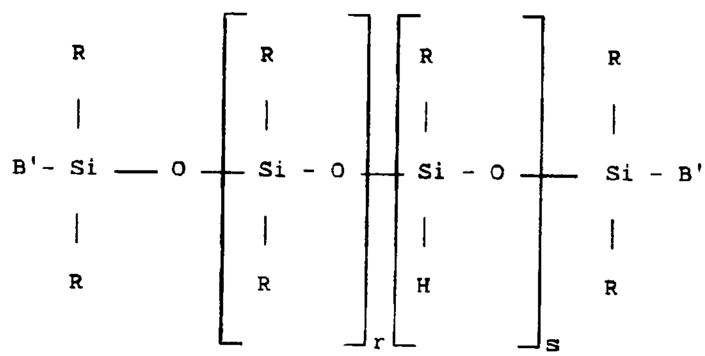

(4)

dans laquelle R, r et s ont la signification donnée ci-dessus pour la formule (1) et les radicaux B', identiques ou différents, sont choisis parmi les radicaux R et un atome d'hydrogène,
et de formule :

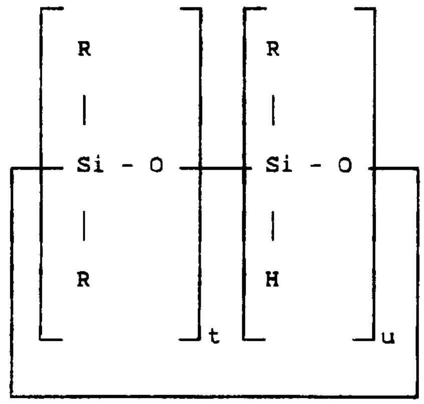

(5)

dans laquelle R, t et u ont la signification donnée ci-dessus pour la formule (2).

Sur ce polymère à SiH de formules (4) ou (5), on effectue une réaction d'hydrosilylation en présence d'une quantité catalytiquement efficace d'un catalyseur au platine sur un dérivé organique de benzalmalonate choisi parmi ceux de formule :

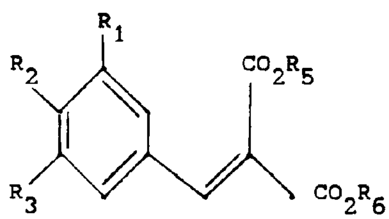

(I)

dans laquelle $R_1$, $R_2$, $R_3$, $R_5$ et $R_6$ ont la même signification qu'à la formule (3) ci-dessus, sauf que le radical Y est alors le radical homologue insaturé monovalent Y' de formule :

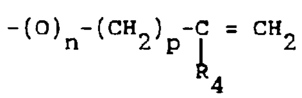

dans laquelle n, p et $R_4$ ont la même signification qu'à la formule (3) ci-dessus.

Certains des dérivés de formule (I) dans laquelle n = 1 sont déjà décrits dans la littérature de chimie en particulier dans J. Chem. Soc. PERKIN TRANS (I) - 1985, pages 1627-1635 et dans Chem. Ber. Vol 99 - pages 1962-1965.

De façon générale les dérivés de formule (I) peuvent être préparés par réaction de KNOEVENAGEL, à savoir condensation d'un aldéhyde aromatique (II) avec un diester d'acide malonique de formule (III) dans le toluène en présence d'acétate de piperidinium comme catalyseur. L'eau est éliminée par azéotropie. Le schéma réactionnel est le suivant :

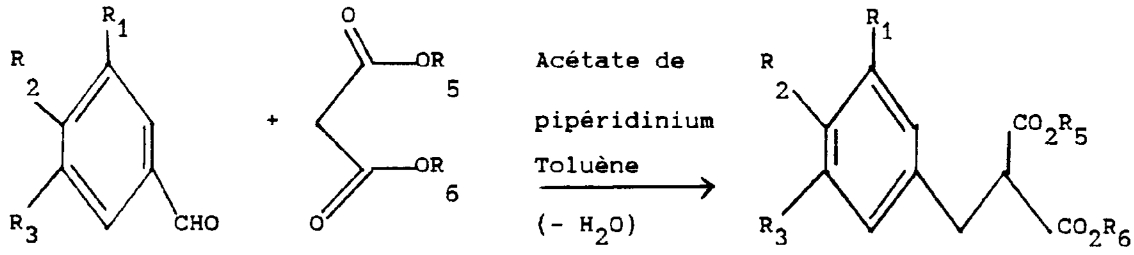


(II) (III) (I)

$R_1$, $R_2$, $R_3$, $R_5$ et $R_6$ ayant les significations indiquées ci-dessus pour la formule (I).

Les produits sont recristallisés, distillés ou séparés par chromatrographie sur colonne. Les aldéhydes de formule (II), qui sont des composés connus, peuvent être obtenus selon l'une des méthodes suivantes :

- Première méthode :

L'aldéhyde de formule (II) dans laquelle $R_1$ représente un reste $-(CH_2)_p-C(R_4) = CH_2$ lorsque p = 1, $R_2$ représente un reste hydroxyle et $R_3$ a la signification mentionnée ci-dessus peut être obtenu par réarrangement de CLAISEN d'un aldéhyde de formule (IV) selon le schéma réactionnel suivant :

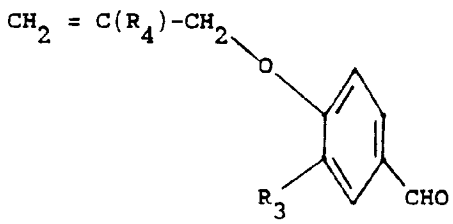

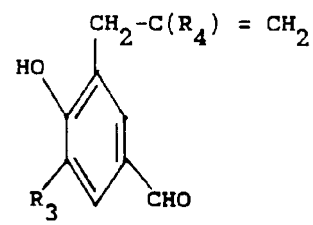

(IV) (IIA)

Ce réarrangement peut être effectué dans les conditions décrites par TARBELL (Organic Reactions, vol. 2, John WILEY, New-York, 1944, page 1) par chauffage à au moins 170 °C environ du composé de formule (IV), éventuellement en présence d'un solvant.

L'aldéhyde de formule (IV) peut être obtenu par réaction d'un halogénure d'alcényle de formule (V) sur un aldéhyde de formule (VI) :

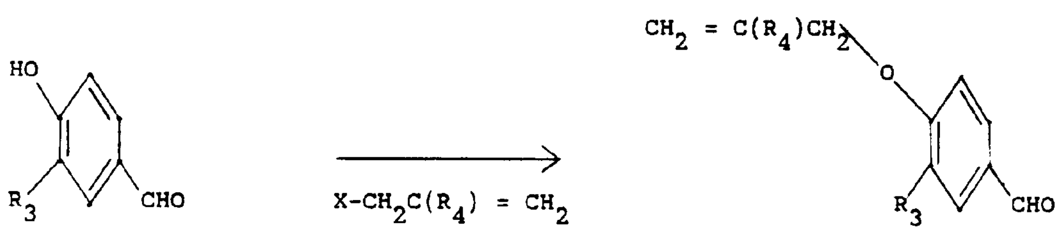


(VI) (V) (IV)

Cette réaction est effectuée en présence d'une base dans un solvant, par exemple en présence d'un carbonate de métal alcalin dans le diméthylformamide, à une température comprise entre la température ambiante

et le point d'ébullition du solvant. L'aldéhyde de formule (VI) peut être préparé selon des méthodes connues. Dans le composé de formule (V), X représente un atome d'halogène, de préférence un atome de chlore ou de brome.

- Deuxième méthode :

L'aldéhyde de formule (IIB) répondant à la formule (II) dans laquelle $R_1$ représente un reste $-(CH_2)_p-C(R_4) = CH_2$ lorsque p = 1, $R_2$ représente un reste alcoxy en $C_1$-$C_6$ et $R_3$ a la signification mentionnée ci-dessus, peut être obtenu selon l'une des deux voies ci-dessous :

- Première voie :

Par formylation d'un éther de phénol de formule (VII) selon le schéma réactionnel suivant :

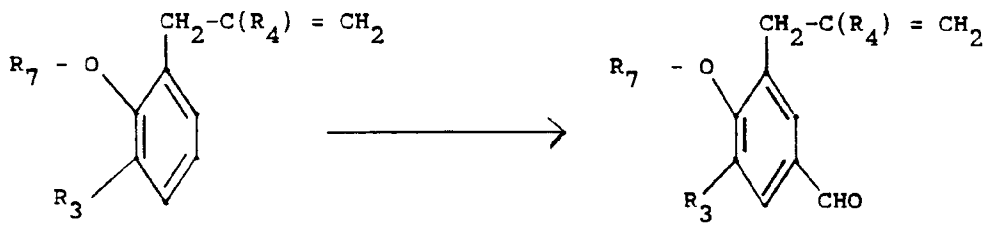

(VII) (IIB)

$R_7$ représente un radical alkyle en $C_1$-$C_6$, $R_3$ ayant la signification mentionnée ci-dessus.

Cette réaction est effectuée par exemple grâce à l'addition des complexes, formés par l'action de l'oxychlorure de phosphore sur les formamides disubstitués selon VILSMEIER et HAACK (Ber., 60, page 119, 1927), sur les composés de formule (VII).

L'éther de phénol (VII) peut être préparé selon des méthodes connues.

- Deuxième voie :

Le composé de formule ($II_A$) obtenu par la première méthode peut être transformé en composé de formule ($II_B$) par réaction avec un halogénure ou un sulfate d'alkyle en $C_1$-$C_6$ en présence d'une base, par exemple en présence d'un carbonate de métal alcalin, dans un solvant tel que le diméthylformamide, ou bien en présence d'un hydrure de métal alcalin dans le 1,2-diméthoxyéthane, selon le schéma réactionnel suivant :

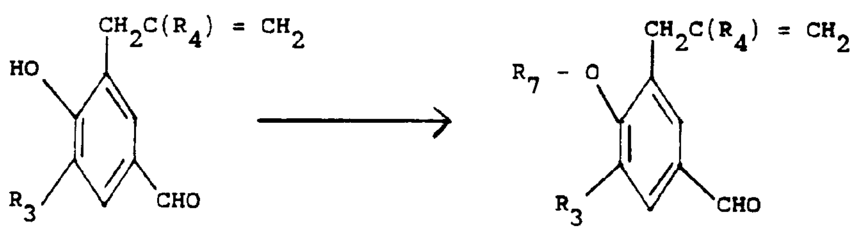

($II_A$) ($II_B$)

- Troisème méthode :

L'aldéhyde de formule (II) dans laquelle $R_1$ ou $R_2$ représente un reste $-(CH_2)_p-C(R_4) = CH_2$ et $R_3$ représente un atome d'hydrogène, un reste alkyle en $C_1$-$C_6$ ou un reste alcoxy en $C_1$-$C_6$ peut également être obtenu par

réaction de l'orthoformiate d'éthyle sur un bromure de phénylmagnésium de formule (VIII), suivie d'une hydrolyse de l'acétal formé :

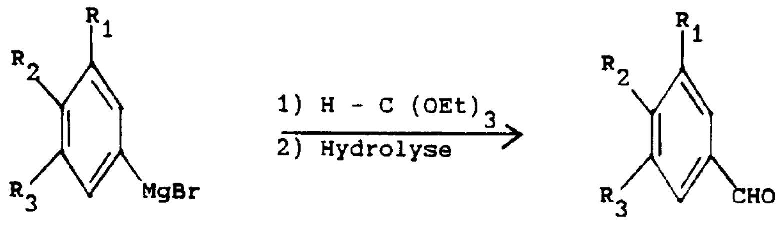


(VIII) (II)

Cette réaction peut être effectuée dans les conditions décrites par QUELET (C.R. Acad. Sci. vol. 182, page 1285 et Bull. Soc. Chim. Fr. vol. 45 page 267), par exemple dans un solvant inerte tel que l'éther éthylique, le dioxane ou le 1,2-diméthoxyéthane, à une température comprise entre la température ambiante et le point d'ébullition du solvant. Dans les composés de formules (II) et (VIII), l'un des substituants $R_1$ ou $R_2$ représente un radical $-(CH_2)_p-C(R_4) = CH_2$, $R_4$ et p ayant les signfications mentionnées ci-dessus, et l'autre représente un atome d'hydrogène, un radical alkyle en $C_1$-$C_6$ ou un radical alcoxy en $C_1$-$C_6$ et $R_3$ représente un atome d'hydrogène, un radical alkyle en $C_1$-$C_6$ ou un radical alcoxy en $C_1$-$C_6$.

Les catalyseurs au platine utilisés pour réaliser la réaction d'hydrosilylation des polymères de formules (4) ou (5) sur le dérivé organique de formule (I) sont amplement décrits dans la littérature. On peut en particulier citer les complexes du platine et d'un produit organique décrit dans les brevets américains US-A-3 159 601, US-A-3 159 602, US-A-3 220 972 et les brevets européens EP-A-57 459, EP-A-188 978 et EP-A-190 530 et les complexes du platine et d'organopolysiloxane vinylé décrits dans les brevets américains US-A-3 419 593, US-A-3 377 432 et US-A-3 814 730.

Pour faire réagir le polymère à SiH de formules (4) ou (5) sur le dérivé de formule (I) on utilise généralement une quantité de catalyseur au platine calculée en poids de platine métal comprise entre 5 et 600 ppm, de préférence entre 10 et 200 ppm basés sur le poids de polymère à SiH de formules (4) ou (5).

La réaction d'hydrosilylation peut avoir lieu en masse ou au sein d'un solvant organique volatil tel que le toluène, l'heptane, le xylène, le tétrahydrofuranne et le tétrachloroéthylène.

Il est généralement souhaitable de chauffer le mélange réactionnel à une température comprise entre 60 et 120 °C pendant le temps nécessaire pour que la réaction soit complète. Par ailleurs on peut ajouter goutte à goutte le polymère à SiH sur le dérivé de formule (I) en solution dans un solvant organique, ou bien ajouter simultanément le polymère à SiH et le dérivé de formule (I) à une suspension de catalyseur dans le solvant.

Il est recommandé de vérifier que la réaction est complète en dosant les SiH résiduels par la potasse alcoolique puis on élimine le solvant par exemple par distillation sous pression réduite.

L'huile brute obtenue peut être purifiée, par exemple par passage sur une colonne absorbante de silice.

Les polymères de formules (1) et (2) présentent un indice de réfraction remarquablement élevé. Ils sont donc utilisables en particulier en mélange avec les compositions organiques ou organosiliciques utilisées pour enrober les fibres optiques, dans le cas où on recherche à obtenir un revêtement à indice élevé.

Par ailleurs les polymères de formules (1) ou (2) sont de remarquables lubrifiants de diverses matières plastiques telles que : polyoléfines, polyesters et surtout PVC (polychlorure de vinyle) et permettent d'éviter le collage sur les outils et machines de mise en oeuvre de ces matières plastiques.

Pour cette dernière application on incorpore de 0,001 à 3 parties en poids de polymère pour 100 parties en poids de matière plastique avant sa mise en oeuvre.

Les exemples suivants illustrent l'invention.

- EXEMPLE 1 :

Préparation du polymère statistique de formule :

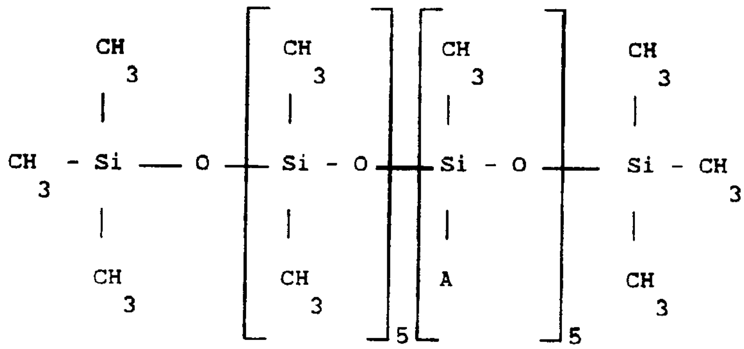

(1)

avec A représente :

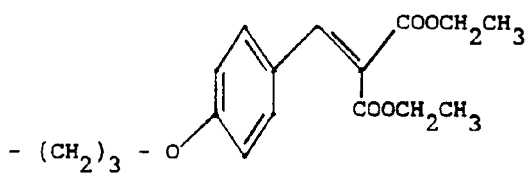

A une suspension de platine sur charbon à 5 % (166 mg) dans du toluène sec (5 ml) à 90-100 °C sous azote et sous agitation, on ajoute goutte à goutte en une heure 30 minutes, une solution dans du toluène (55 ml) de 30 g de 4-allyloxy benzylidène malonate de diéthyle et 16 g du polymère statistique de formule ci-dessus où A est un atome d'hydrogène, tout en maintenant la température entre 100 et 105 °C.

On laisse sous agitation et au reflux jusqu'à disparition des groupements SiH (absence de bande à 2 180 $cm^{-1}$ en infra-rouge), soit 10 heures. On filtre sur papier, on élimine le solvant et on lave 2 fois à l'éthanol à 80 %. L'huile obtenue est reprise dans le chloroforme, séchée sur sulfate de sodium et filtrée sur célite pour éliminer les restes de platine colloïdal. On obtient après évaporation du solvant une huile jaune pâle - poids : 36 g, rendement : 78 %,

Spectre UV (éthanol) : λ max : 311 nm.

L'analyse par résonance magnétique nucléaire ($^{1}H$ et $^{29}Si$ RMN) indique que le produit a bien la structure souhaitée.

- <u>EXEMPLE 2</u> :

Préparation du polymère statistique de formule :

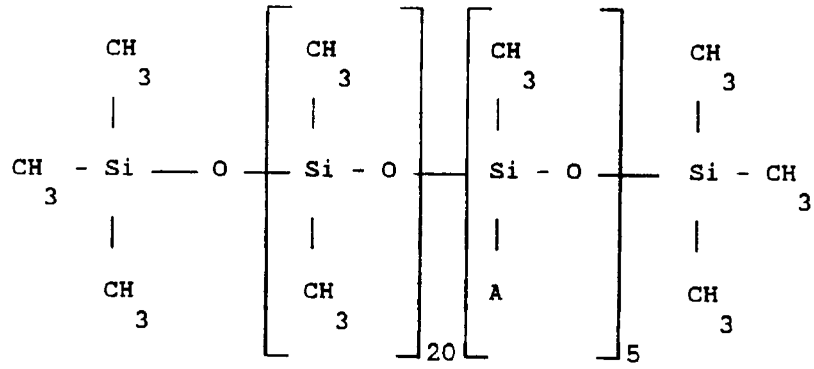

avec A représente :

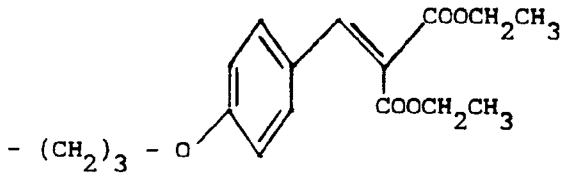

On répète le mode opératoire de l'exemple 1 en partant du polymère statistique de formule ci-dessus où A est un atome d'hydrogène.

On obtient ainsi une huile légèrement jaune.

Spectre UV ($CHCl_3$) : $\lambda$ max = 313 nm.

- <u>EXEMPLE 3</u> :

Préparation du polymère statistique de formule :

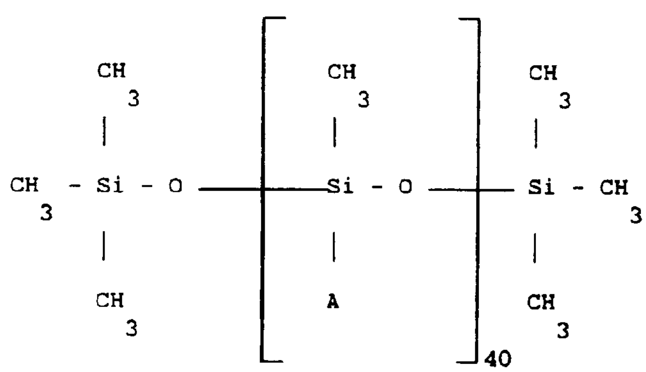

avec A représente :

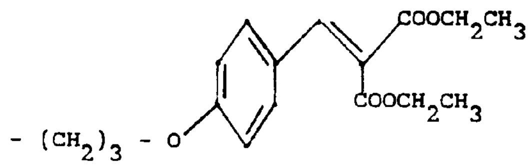

On répète le mode opératoire de l'exemple 1 en partant du polymère statistique de formule ci-dessus où A est un atome d'hydrogène.

On obtient une huile jaune visqueuse.

Spectre UV (CHCl3) : λ max = 313 nm.

- EXEMPLE 4 :

Préparation du polymère statistique de formule :

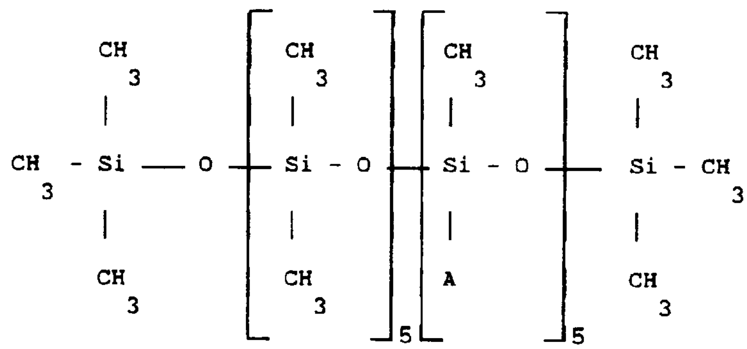

avec A représente :

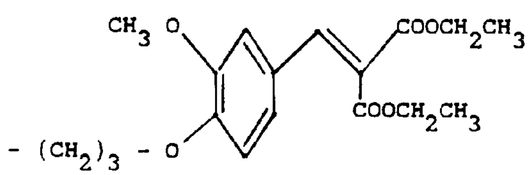

On répète le mode opératoire de l'exemple 1, sauf que l'on part de 20 g de 4-allyloxy-3-méthoxy benzylidène malonate de diéthyle et de 9,7 g du polymère statistique de formule ci-dessus où A est un atome d'hydrogène.

On obtient 22 g d'une huile épaisse jaune pâle (rendement : 74 %).

Spectre UV ($CHCl_3$) :

λ max = 330 nm

λ max = 300 nm (épaulement).

L'analyse par résonance magnétique nucléaire ($^1H$ et $^{29}Si$) indique que le produit obtenu a bien la structure souhaitée.

- EXEMPLE 5 :

Préparation du polymère statistique de formule :

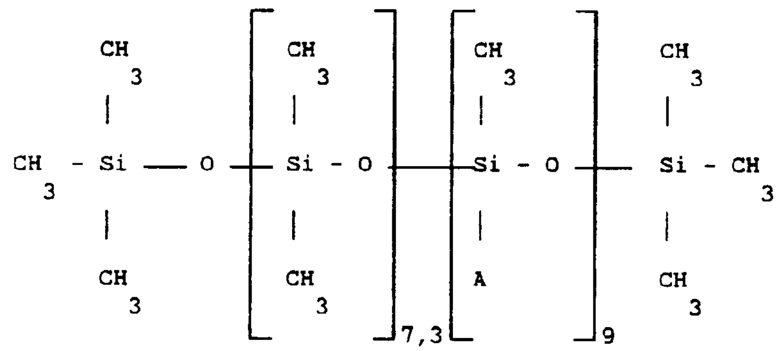

avec A représente :

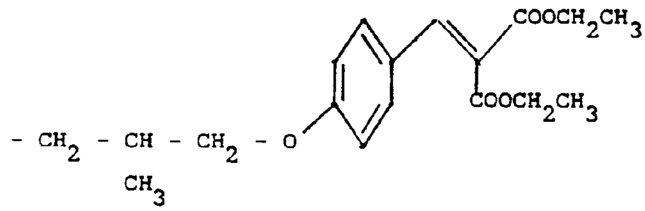

Dans un ballon tricol maintenu à 100 °C par un bain d'huile muni d'une agitation magnétique et d'un réfrigérant ascendant, on charge 22,7 g (0,071 mole) de 4-méthallyloxy benzylidène malonate de diéthyle, 33 g de toluène et 14,4 µl d'une solution dans l'hexane (à 8,45 % en poids de platine métal) d'un complexe de platine préparé à partir d'acide chloroplatinique et de 1,3-divinyl 1,1,3,3-tétraméthyl disiloxane comme décrit dans le brevet US-A-3 814 730.

On ajoute en une heure 10 g du polymère statistique de formule ci-dessus où A est un atome d'hydrogène titrant 713 meq/100 g en fonction SiH (meq = milliéquivalent).

Au bout de 24 heures de réaction, on vérifie au moyen de potasse butanolique par dosage des SiH, que le taux de transformation des fonctions SiH est de 73 %.

On obtient alors une huile trouble, légèrement jaune, d'odeur agréable et de très viscosité, après avoir éliminé le toluène par distillation à 100 °C sous pression réduite de 0,66 KPa.

Sur un échantillon de l'huile obtenue on effectue une analyse de Résonance Magnétique Nucléaire du proton (RMN H) à 360 MHz dans $CDCl_3$ qui montre l'existence du monomère non réagi, d'hydrogénosilane, et de la structure résultant d'hydrosilylation de l'insaturation méthallyloxy du monomère, soit :

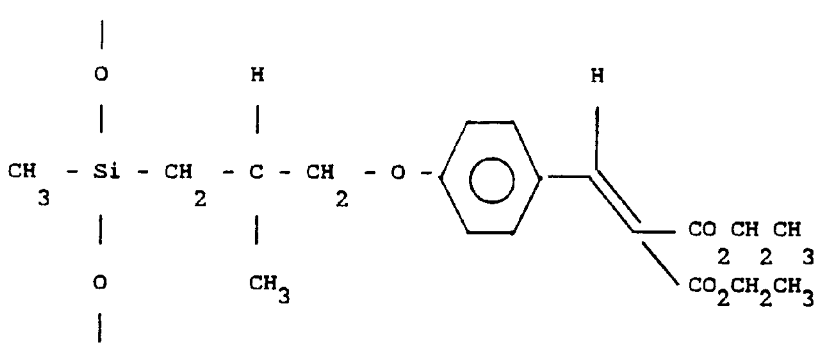

- EXEMPLE 6 :

- EXEMPLE 6a : 3-allyl-4-méthoxy-benzalmalonate de diéthyle :

préparation d'un composé de formule générale (I) dans laquelle $R_1$ représente le radical $-CH_2-CH = CH_2$, $R_2$ représente le radical $-OCH_3$, $R_3$ représente un atome d'hydrogène et $R_5$ et $R_5$ représentent le radical $-C_2H_5$ :

Premier stade : Préparation du 3-allyl-4-méthoxy-benzaldéhyde :

Première méthode :

On chauffe pendant 4 heures sous azote et sous agitation à 220 °C, 50 g, (0,308 mole) de 4-allyloxybenzaldéhyde. Le mélange réactionnel refroidi est repris dans du dichlorométhane et extrait à la soude 5N. La phase aqueuse est acidifiée à l'acide chlorhydrique 6N et extraite au dichlorométhane. La phase organique est séchée et le solvant évaporé pour donner une huile brun noir. Après distillation sous vide, on recueille la fraction Eb = 138-140 °C sous 106 Pa (15 g, rendement = 30 %) de 3-allyl-4-hydroxy-benzaldéhyde (poudre blanche, Pf = 66 °C).

On introduit successivement le dérivé précédent (14,5 g, 0,089 mole), 30 ml de N,N-diméthylformamide, 13,6 g (0,098 mole) de carbonate de potassium anhydre et 11 ml (0,178 mole) d'iodure de méthyle. On porte le tout à 60-70 °C pendant 3 heures. On verse le mélange réactionnel dans de l'eau glacée et on extrait le tout à l'éther diisopropylique. On sèche la phase organique sur sulfate de sodium, on filtre et évapore le solvant pour obtenir le 3-allyl-4-méthoxybenzaldéhyde (huile jaune pâle, 13,6 g, rendement = 87 %).

Deuxieme méthode :

Dans un réacteur de 5 litres, on introduit successivement du 2-allylphénol (100 g, 0,75 mole), 2 litres de N,N-diméthylformamide sec et du carbonate de potassium anhydre (206 g, 1,49 mole). A température ambiante, on introduit goutte à goutte de l'iodure de méthyle (92 ml, 1,49 mole). On laisse pendant 4 heures à 38 °C. On verse le mélange réactionnel dans de l'eau glacée et on extrait au dichlorométhane. La phase organique est lavée à l'eau et séchée. Après évaporation du solvant et distillation sous vide, on récupère une fraction distillant à 110 °C sous 5 000 Pa de 2-allylanisole (liquide incolore, 46 g, rendement = 42 %).

Dans un réacteur de 500 ml, on place du N,N-diméthylformamide (75 ml, 0,98 mole) et on ajoute, tout en refroidissant vers 5 °C, de l'oxychlorure de phosphore (26 ml, 0,28 mole). On maintient le mélange une heure à 10 °C et on introduit goutte à goutte le dérivé précédent (41,5 g, 0,28 mole). On monte progressivement la température à 100 °C en une heure et on maintient le mélange réactionnel à cette température pendant 10 heures. Le mélange refroidi est versé dans de l'eau glacée et extrait à l'éther diisopropylique. Les phases organiques sont lavées à l'eau, séchées sur sulfate de sodium, filtrées et le solvant évaporé pour donner un produit brut (31 g), lequel est purifé par chromatographie sur silice 60 (éluant : toluène/hexane 50/50) pour donner une fraction (4,5 g) de 3-allyl-4-méthoxy-benzaldéhyde identique à celui obtenu par la première méthode.

Deuxième stade : préparation du 3-allyl-4-méthoxy-benzalmalonate de diéthyle :

On chauffe au reflux, sous azote avec un Dean Stark, un mélange du dérivé précédent (10 g, 0,057 mole), de malonate de diéthyle (9,09 g, 0,057 mole), de toluène (15 ml), d'acide acétique (0,36 ml) et de pipéridine (0,68 ml). Après 5 heures de chauffage, on a recueilli 1 ml d'eau. Après refroidissement, on lave la phase toluénique à l'eau, on la sèche et on distille le solvant. On obtient une huile orangée qui cristallise. On la recristallise dans l'éther diisopropylique avec traitement au noir animal. On obtient des cristaux blancs de 3-allyl-4-méthoxy benzalmalonate de diéthyle (12,7 g, rendement = 70 %) possédant les caractéristiques suivantes :

– point de fusion : 69 °C,
– spectre de RMN $^1H$ ($CDCl_3$) : spectre conforme à la structure attendue,
– spectre UV ($CHCl_3$) :

| | |
|---|---|
| λ max | : 318 nm |
| ∊ | : 24450 |

– analyse élémentaire :

| | |
|---|---|
| calculé | : C 67,91 ; H 6,97 ; O 25,13 |
| trouvé | : C 68,04 ; H 6,89 ; O 25,23. |

- Exemple 6b :

Préparation du polymère statistique de formule :

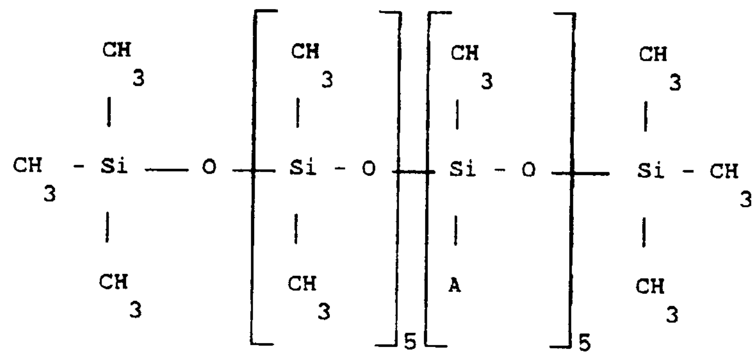

avec A représente :

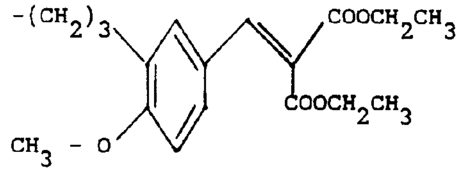

A une suspension de platine sur charbon à 5 % (55 mg) dans du toluène sec (5 ml) à 90-100 °C, sous azote et sous agitation, on ajoute goutte à goutte en une heure trente minutes, une solution toluénique (20 ml) de 3-allyl-4-méthoxy benzalmalonate de diéthyle (10 g, 31,4 méq) et de polymère statistique de formule ci-dessus où A est un atome d'hydrogène (4,60 g, 31,4 méq en SiH) tout en maintenant la température entre 100 et 105 °C. On laisse sous agitation et au reflux jusqu'à disparition des groupement SiH (absence de bande à 2 180 $cm^{-1}$ en infra rouge), soit 8 heures. On filtre sur papier, élimine le solvant et lave deux fois à l'éthanol à 80 %. L'huile jaune pâle obtenue est reprise dans le dichlorométhane, séchée sur sulfate de sodium et passée sur lit de silice 60. On obtient après évaporation du solvant une huile visqueuse jaune pâle (5,3 g, rendement = 36 %).

- Spectre $^1H$ RMN ($CDCl_3$) : spectre conforme à la formule,
- Spectre $^{29}Si$ RMN ($CDCl_3$) : spectre conforme à la formule,
- Spectre UV ($CHCl_3$) : $\lambda$ max : 318 nm.

- EXEMPLE 7 :

- Exemple 7a : 3-allyl-4,5-diméthoxy-benzalmalonate de diéthyle :

Préparation d'un composé de formule générale (I) dans laquelle $R_1$ représente le radical $-CH_2-CH = CH_2$, $R_2$ et $R_3$ représentent le radical $-OCH_3$ et $R_5$ et $R_6$ représentent le radical $-C_2H_5$.

Premier stade :

On porte à 180 °C pendant 6 heures 30 minutes sous agitation le 4-allyloxy-3-méthoxy-benzaldéhyde (62,5 g, 0,325 mole). On refroidit. Le solide marron est repris dans le dichlorométhane et extrait à la soude à 5 %. La phase aqueuse est acidifiée à l'acide chlorhydrique 3N. Le solide obtenu est filtré et recristallisé dans un mélange éthanol/eau (40/60. On obtient le 3-allyl-4-hydroxy-5-méthoxybenzaldéhyde (poudre beige clair, 62,5 g, rendement = 71 %, point de fusion = 83-84 °C).

Deuxième stade :

On introduit successivement dans un réacteur le dérivé précédent (34 g, 0,18 mole), le diméthylformamide (500 ml), le carbonate de potassium (49 g, 0,35 mole) et l'iodure de méthyle (50 g, 0,35 mole). On maintient à une température de 40 °C pendant 3 heures. On plonge le mélange réactionnel dans de l'eau glacée et on extrait l'huile formée par du dichlorométhane. Après lavage, séchage et évaporation du solvant, on obtient une huile brun clair, laquelle est passée sur lit de silice 60 pour donner une huile jaune pâle de 3-allyl-4,5-diméthoxy-benzaldéhyde (34,3 g, rendement = 92 %).

Troisième stade :

On chauffe pendant 7 heures au reflux avec un Dean Stark un mélange du dérivé précédent (15 g, 0,073 mole), de malonate de diéthyle (11,7 g, 0,073 mole), de toluène (18 ml), d'acide acétique (0,46 ml) et de pipéridine (0,87 ml). Après refroidissement, on lave la phase toluénique à l'eau, on la sèche et on distille le solvant. L'huile orange pâle obtenue (24,5 g, rendement = 96 %) est cristallisée dans un mélange éther diisopropylique/hexane 50/50) pour donner des cristaux blancs de 3-allyl-4,5-diméthoxy-benzalmalonate de diéthyle (14,2 g, rendement = 56 %) possédant les caractéristiques suivantes :

– point de fusion : 43-44 °C,
– spectre de RMN $^1H$ (CDCl3) : spectre conforme à la formule attendue,
– spectre UV ($CHCl_3$) :
λ max = 303nm ∊ = 15 700
λ max = 325 nm ∊ = 12 830 (épaulement)
– analyse élémentaire :
calculé : C 65,50 ; H 6,94 ; O 27,55
trouvé : C 65,33 ; H 6,91 ; O 27,78

- Exemple 7b :

Préparation du polymère statistique de formule :

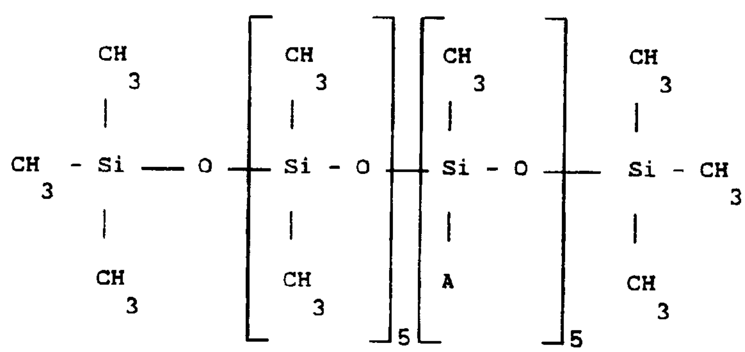

avec A représente :

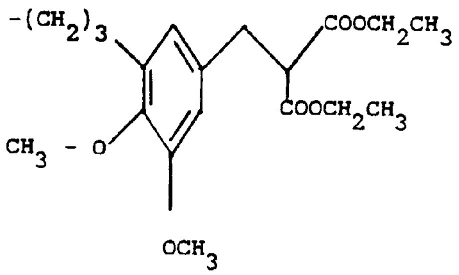

A une suspension de platine sur charbon à 5 % (106 mg) dans du toluène sec (5 ml) à 90-100 °C, sous azote et sous agitation, on ajoute goutte à goutte en une heure trente minutes, une solution toluénique (30 ml) de 3-allyl-4,5-diméthoxy benzalmalonate de diéthyle (10 g, 28,7 méq) et de polymère statistique de formule ci-dessus où A est un atome d'hydrogène (4,55 g, 28 méq en SiH) tout en maintenant la température entre 100 et 105 °C. On laisse sous agitation et au reflux jusqu'à disparition des groupements SiH (absence de bande à 2 180 $cm^{-1}$ en infra rouge), soit 12 heures. On filtre sur papier, élimine le solvant et lave deux fois à l'ethanol à 80 %. L'huile jaune pâle obtenue est reprise dans le dichlorométhane, séchée sur sulfate de sodium et passée sur lit de silice 60. On obtient après évaporation du solvant une huile visqueuse jaune pâle (10,6 g, rendement = 73 %).

-Spectre $^1H$ RMN ($CDCl_3$) : spectre conforme à la formule,
- Spectre $^{29}Si$ RMN ($CDCl_3$) : spectre conforme à la formule,
- Spectre UV ($CDCl_3$) : λ max : 304 nm.

- EXEMPLE 8 :

- Exemple 8a : 3-allyl-4,5-diméthoxy-benzalmalonate de di-(2-éthylhexyle) :

Préparation d'un composé de formule générale (I) dans laquelle $R_1$ représente le radical $-CH_2-CH = CH_2$, $R_2$ et $R_3$ représentent le radical $-OCH_3$ et $R_5$ et $R_6$ représentent le radical $-CH_2CH(C_2H_5)C_4H_9$.

On chauffe au reflux pendant 5 heures avec un Dean Stark un mélange de 3-allyl-4,5-diméthoxy-benzaldéhyde (10,3 g, 0,05 mole), de malonate de di-(2-éthylhexyle) (16,4 g, 0,05 mole), de toluène (20 ml), d'acide acétique (0,41 ml) et de pipéridine (0,77 ml). Après refroidissement, lavage à l'eau de la phase toluénique, séchage et évaporation du solvant, on obtient une huile orangée laquelle est purifiée par chromatographie sur colonne de silice 60 (éluant : heptane/acétate d'éthyle 90/10) pour donner le 3-allyl-4,5-diméthoxy-benzalmalonate de di-(2-éthylhexyle) (huile incolore, 15 g, rendement = 64 %) possédant les caractéristiques suivantes :

– spectre de RMN $^1H$ ($CDCl_3$) : spectre conforme à la formule attendue,
– spectre UV ($CDCl_3$) :
λ max = 303 nm ∊ = 15 500
λ max = 320 nm ∊ = 13 430 (épaulement)
– analyse élémentaire :
calculé : C 72,06 ; H 9,36 ; O 18,58
trouvé : C 72,09 ; H 9,44 ; O 18,69

- Exemple 8b :

Préparation du polymère statistique de formule :

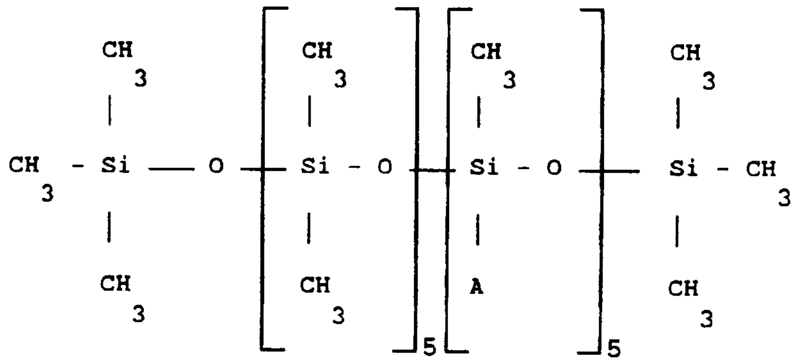

avec A représente :

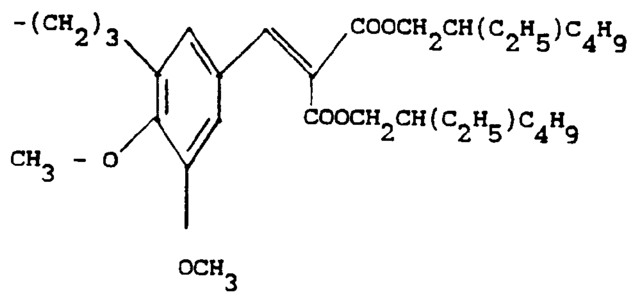

A une suspension de platine sur charbon à 5 % (80 mg) dans du toluène sec (5 ml) à 90-100 °C, sous azote et sous agitation, on ajoute goutte à goutte en une heure trente minutes, une solution toluénique (30 ml) de 3-allyl-4,5-diméthoxy benzalmalonate de di(2-éthylhexyle) (10 g, 19,3 méq) et de polymère statistique de formule ci-dessus où A est un atome d'hydrogène (2,86 g, 17,6 méq en SiH) tout en maintenant la température entre 100 et 150 °C. On laisse sous agitation et au reflux jusqu'à disparition des groupements SiH (absence de bande à 2 180 $cm^{-1}$ en infra rouge), soit 12 heures. On filtre sur papier, élimine le solvant et lave deux fois à l'éthanol à 80 %. L'huile jaune pâle obtenue est reprise dans le dichlorométhane, séchée sur sulfate de sodium et passée sur lit de silice 60. On obtient après évaporation du solvant une huile visqueuse jaune pâle (5,1 g, rendement = 43 %).

- Spectre $^{1}H$ RMN ($CDCl_3$) : spectre conforme à la formule,
- Spectre $^{29}Si$ RMN ($CDCl_3$) : spectre conforme à la formule,
- Spectre UV ($CDCl_3$) : $\lambda$ max : 305 nm

- EXEMPLE 9 :

- Exemple 9a : 3-allyl-4-butoxy-5-méthoxy-benzalmalonate de diéthyle :

Préparation d'un composé de formule générale (I) dans laquelle $R_1$ représente le radical $-CH_2CH = CH_2$, $R_2$ représente le radical $-OC_4H_9$, $R_3$ représente le radical $-OCH_3$ et $R_5$ et $R_6$ représentent le radical $-C_2H_5$.

Premier stade :

On maintient pendant 3 heures à 40-45 °C un mélange de 3-allyl-4-hydroxy-5-méthoxy-benzaldéhyde (10,25 g, 0,053 mole), de diméthylformamide (150 ml), de carbonate de potassium (8,29 g, 0,06 mole) et de 1-bromobutane (8,22 g, 0,06 mole). On plonge le mélange réactionnel dans de l'eau glacée et on extrait l'huile formée par du dichlorométhane. Après lavage à l'eau, séchage et évaporation du solvant, on obtient une huile brune laquelle est passée sur lit de silice 60 pour donner une huile jaune pâle de 3-allyl-4-butoxy-5-méthoxy-benzaldéhyde (13 g, rendement = 91 %).

Deuxième stade :

On chauffe au reflux pendant 7 heures avec un Dean Stark un mélange du dérivé précédent (10,2 g, 0,041 mole), de malonate de diéthyle (7 g, 0,041 mole), de toluène (12 ml), d'acide acétique (0,26 ml) et de pipéridine (0,49 ml). De la même manière qu'à l'exemple 8a, on obtient le 3-allyl-4-butoxy-4-méthoxy-benzalmalonate de diéthyle (huile incolore, 10 g, rendement = 67 %) possédant les caractéristiques suivantes :

– spectre de RMN $^1H$ ($CDCl_3$) : spectre conforme à la formule attendue,
– specture UV ($CDCl_3$) :
λ max = 305 nm ∊ = 15 500
λ max = 325 nm ∊ = 13 530
(épaulement)
– analyse élémentaire :
calculé : C 67,67 ; H 7,74 ; O 24,58
trouvé : C 67,87 ; H 7,83 ; O 24,44

- Exemple 9b :

Préparation du polymère statistique de formule :

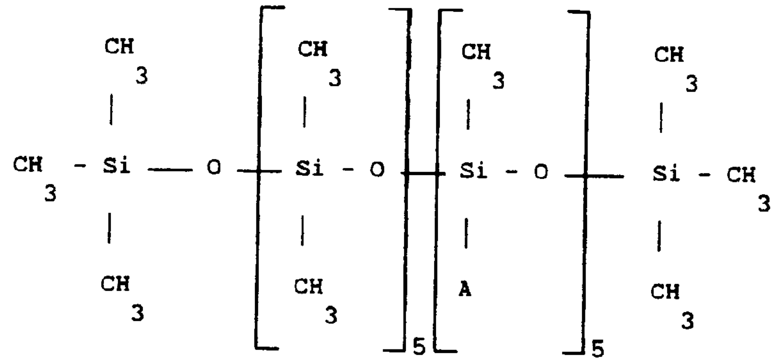

avec A représente :

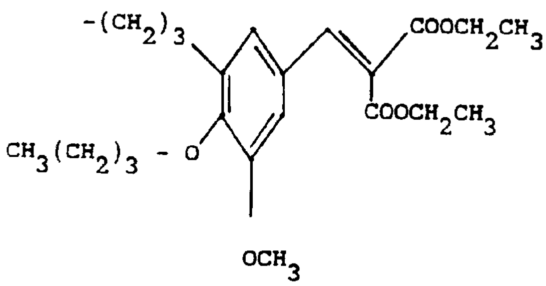

A une suspension de platine sur charbon à 5 % (60 mg) dans du toluène sec (5 ml) à 90-100 °C, sous azote et sous agitation, on ajoute goutte à goutte en une heure trente minutes, une solution toluénique (20 ml) de 3-allyl-4-butoxy-5-méthoxy benzalmalonate de diéthyle (8,2 g, 21 méq) et de polymère statistique de formule ci-dessus où A est un atome d'hydrogène (3,24 g, 19,9 méq en SiH) tout en maintenant la température entre 100 et 105 °C. On laisse sous agitation et au reflux jusqu'à disparition des groupements SiH (absence de bande à 2 180 $cm^{-1}$ en infra rouge), soit 10 heures. On filtre sur papier, élimine le solvant et lave deux fois à l'éthanol à 80 %. L'huile jaune pâle obtenue est reprise dans le dichlorométhane, séchée sur sulfate de sodium et passée sur lit de silice 60. On obtient après évaporation du solvant une huile visqueuse incolore (4,7 g, rendement = 43 %).

- Spectre $^1H$ RMN ($CDCl_3$) : spectre conforme à la formule,

- Spectre $^{29}Si$ RMN ($CDCl_3$) : spectre conforme à la formule,
- Specture UV ($CDCl_3$) : $\lambda$ max : 306 nm
  $\lambda$ max = 325 nm.

## Revendications

1. - Polymère diorganopolysiloxane modifié choisi parmi ceux de formule :

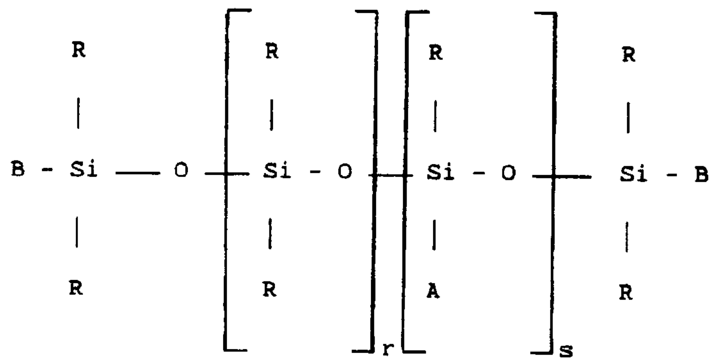

(1)

dans laquelle les symboles :
- R, identiques ou différents, sont choisis parmi les radicaux alkyle en $C_1$-$C_{10}$ , phényle et trifluoro-3,3,3 propyle, au moins 80 % en nombre des radicaux R étant méthyle,
- B, identiques ou différents, sont choisis parmi les radicaux R et le radical A,
- r est un nombre entier choisi entre 0 et 200 inclusivement,
- s est un nombre entier choisi entre 0 et 50 inclusivement et si s est O, au moins un des deux symboles B est A, et de formule :

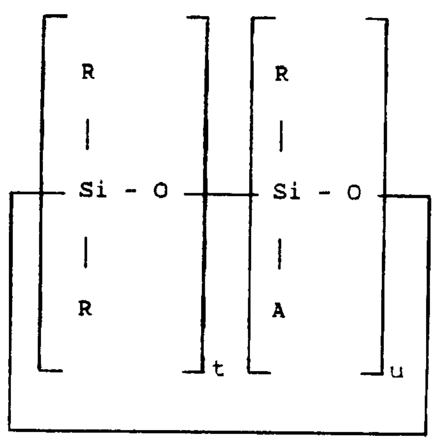

(2)

dans laquelle :
- R a la même signification qu'à la formule (1),
- u est un nombre entier compris entre 1 et 20 incluset
- t est un nombre entier entre 0 et 20 inclus,
- t + u est égal ou supérieur à 3.

formules dans lesquelles A est un radical de formule

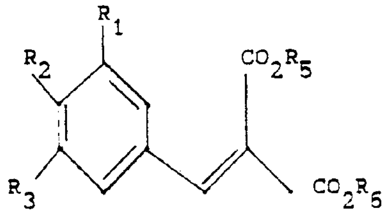

(3)

dans laquelle :

– $R_1$ et $R_2$ sont choisis parmi un atome d'hydrogène, un radical hydroxyle, un radical triméthylsiloxy, un radical alkyle en $C_1$-$C_6$, un radical alcoxy en $C_1$-$C_6$, et un groupement divalent Y :

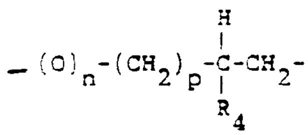

,

fixé au noyau benzénique par la terminaison $-(O)_n-$ et dans lequel :

– n est 0 ou 1,

– p est un nombre entier compris entre 1 et 10 inclus et $R_4$ est choisi parmi un atome d'hydrogène et un radical alkyle en $C_1$-$C_4$, l'un des deux radicaux $R_1$ et $R_2$ représentant nécessairement le groupement Y,

– $R_3$ représente un atome d'hydrogène, un radical alkyle en $C_1$-$C_6$ et un radical alcoxy en $C_1$-$C_6$,

– $R_5$ et $R_6$, identiques ou différents, représentent un radical alkyle en $C_1$-$C_8$.

2. - Polymère selon la revendication 1, caractérisé en ce qu'il présente en outre au moins l'une des caractéristiques suivantes :

– R est méthyle
– B est méthyle
– $R_1$ est H ou Y
– $R_2$ est Y, méthoxy ou butoxy
– $R_3$ est H ou méthoxy
– p = 1
– $R_4$ est H ou méthyle
– $R_5$ et $R_6$ sont éthyle ou 2-éthylhexyle
– r est compris entre 5 et 20 inclus
– s est compris entre 2 et 15 inclus
– t + u est compris entre 3 et 10 inclus.

3. - Procédé de préparation d'un polymère tel que défini à la revendication 1 ou 2, caractérisé en ce qu'on effectue une réaction d'hydrosilylation en présence d'une quantité catalytiquement efficace d'un catalyseur au platine, d'un polymère à SiH choisi parmi ceux de formule :

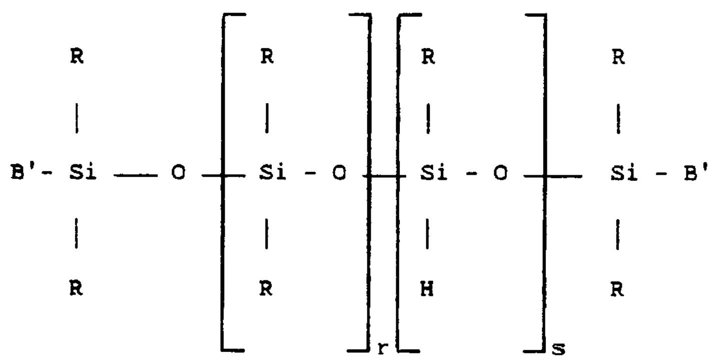

(4)

dans laquelle R, r et s sont la signification donnée ci-dessus pour la formule (1) et les radicaux B′, identiques ou différents, sont choisis parmi les radicaux R et un atome d'hydrogène,
et de formule :

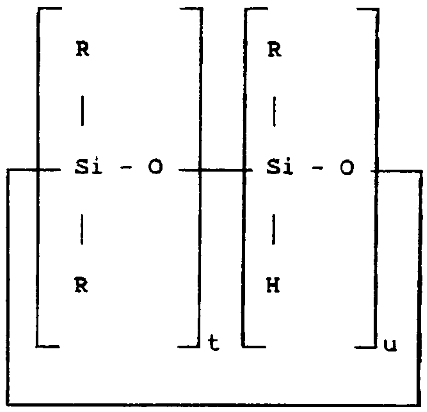

(5)

dans laquelle R, t et u ont la signification donnée ci-dessus pour la formule (2),
sur un dérivé organique de benzalmalonate choisi parmi ceux de formule :

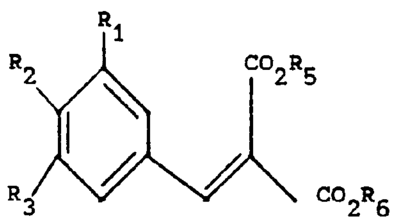

(I)

dans laquelle $R_1$, $R_2$, $R_3$, $R_5$ et $R_6$ ont la même signification qu'à la formule (3) ci-dessus, sauf que le radical Y est alors le radical homologue insaturé monovalent Y′ de formule :

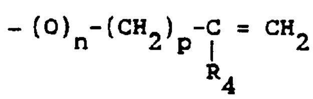

dans laquelle n, p et $R_4$ ont la même signification qu'à la formule (3) ci-dessus.

## Claims

1. Modified diorganopolysiloxane polymer chosen from those of formula:

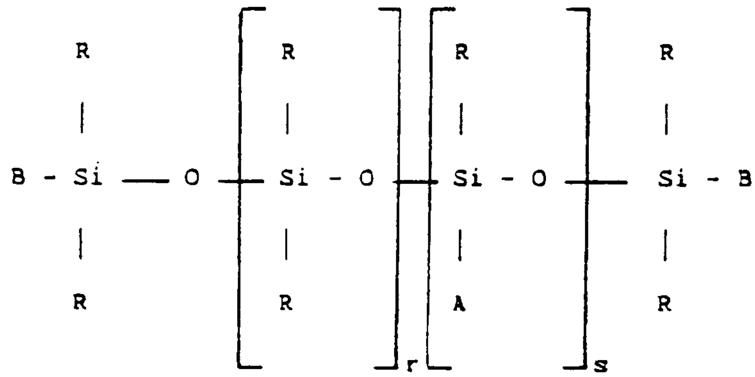

(1)

in which the symbols:

- R, which are identical or different, are chosen from $C_1$-$C_{10}$ alkyl, phenyl and 3,3,3-trifluoropropyl radicals, at least 80% of the number of the radicals R being methyl,
- B, which are identical or different, are chosen from the radicals R and the radical A,
- r is an integer chosen between 0 and 200 inclusive,
- s is an integer chosen between 0 and 50 inclusive and if s is 0, at least one of the two symbols B is A,

and of formula:

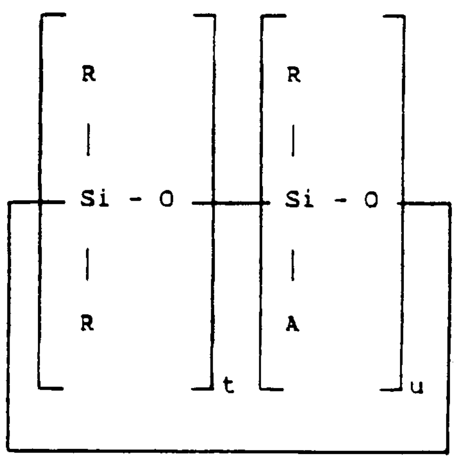

(2)

in which:

- R has the same meaning as in formula (1),
- u is an integer between 1 and 20 inclusive, and
- t is an integer between 0 and 20 inclusive,
- t + u is equal to or greater than 3

in which formulae A is a radical of formula

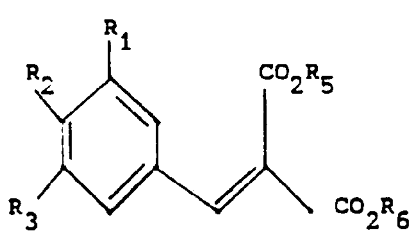

(3)

in which:

- $R_1$ and $R_2$ are chosen from a hydrogen atom, a hydroxyl radical, a trimethylsiloxy radical, a $C_1$-$C_6$, alkyl radical, a $C_1$-$C_6$ alkoxy radical and a divalent group Y of formula:

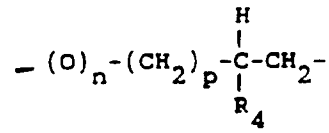

which is attached to the benzene ring by the terminal group $-(-O-)_n$ and in which:

- n is 0 or 1,
- p is an integer between 1 and 10 inclusive, and $R_4$ is chosen from a hydrogen atom and a $C_1$-$C_4$ alkyl radical, one of the two radicals $R_1$ and $R_2$ necessarily denoting the group Y,
- $R_3$ denotes a hydrogen atom, a $C_1$-$C_6$, alkyl radical and a $C_1$-$C_6$, alkoxy radical,
- $R_5$ and $R_5$ which are identical or different, denote a $C_1$-$C_8$ alkyl radical.

**2.** Polymer according to claim 1, characterised in that it additionally exhibits at least one of the following characteristics:

- R is methyl
- B is methyl
- R, is H or Y
- $R_2$ is Y, methoxy or butoxy
- $R_3$ is H or methoxy
- p = 1
- $R_4$ is H or methyl
- $R_5$ and $R_5$ are ethyl or 2-ethylhexyl
- r is between 5 and 20 inclusive
- s is between 2 and 15 inclusive
- t + u is between 3 and 10 inclusive.

**3.** Process for the preparation of a polymer such as defined in claim 1 or 2, characterised in that a hydrosilylation reaction is carried out, in the presence of a catalytically effective quantity of a platinum catalyst, of a polymer containing SiH chosen from those of formula:

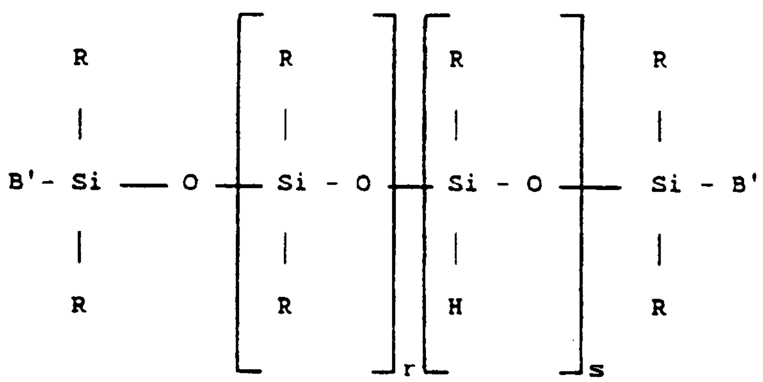

(4)

in which R, r and s have the meaning given above for formula (1) and the radicals B′, which are identical or different, are chosen from radicals R and a hydrogen atom,
and of formula:

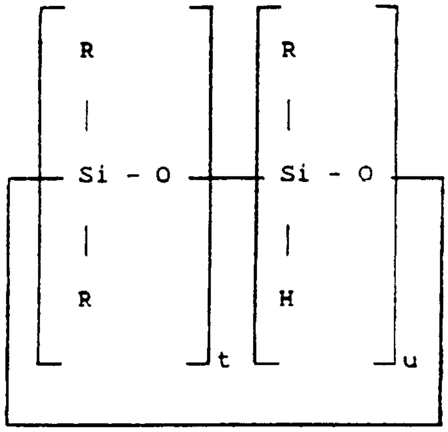

(5)

in which R, t and u have the meaning given above for formula (2), with an organic benzalmalonate derivative chosen from those of formula:

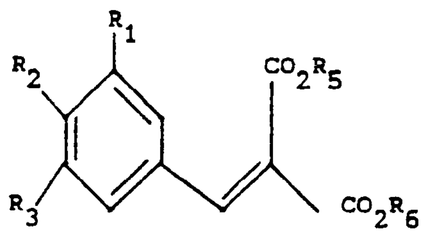

(I)

in which $R_1$, $R_2$, $R_3$, $R_5$ and $R_6$ have the same meaning as in formula (3) above, except that the radical Y is then the monovalent unsaturated homologous radical Y′ of formula

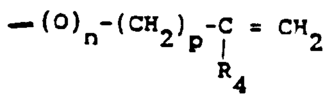

in which n, p and $R_4$ have the same meaning as in formula (3) above.

## Patentansprüche

1. Modifiziertes Diorganopolysiloxanpolymeres, ausgewählt unter denjenigen der Formel

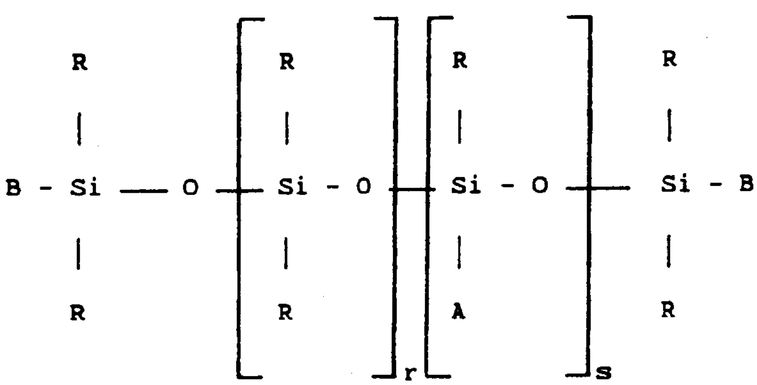

(1)

worin die Symbole:

R, die gleich oder voneinander verschieden sind, ausgewählt sind unter den $C_{1-10}$-Alkyl-, Phenyl- und 3,3,3-Trifluorpropylresten, wobei zumindest 80% der Anzahl der Reste R Methylreste sind,

B, die gleich oder voneinander verschieden sind, ausgewählt sind unter den Resten R und dem Rest A,

r eine ganze Zahlt ausgewählt zwischen 0 und 200 einschließlich, bedeutet,

s eine ganze Zahl, ausgewählt zwischen 0 und 50 einschließlich, bedeutet und,wenn s für 0 steht, zumindest eines der beiden Symbole B für A steht, und der Formel

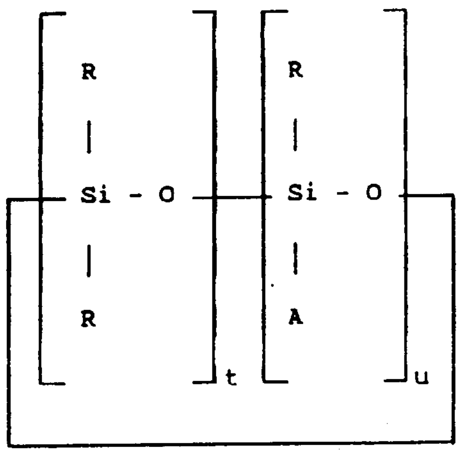

(2)

worin

R die für Formel (1) angegebene Bedeutung besitzt,

u eine ganze Zahl zwischen 1 und 20 einschließlich bedeutet,

t eine ganze Zahl zwischen 0 und 20 einschließlich bedeutet,

t + u gleich oder größer als 3 ist,

in welchen Formeln A ein Rest der Formel

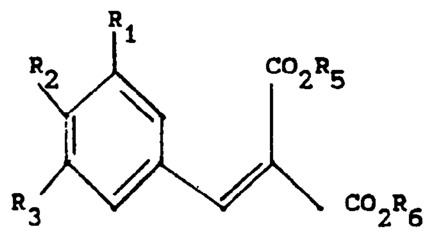

(3)

ist, worin

$R_1$ und $R_2$ ausgewählt sind unter einem Wasserstoffatom, einer Hydroxylgruppe, einer Trimethylsiloxygruppe, einem $C_{1-6}$-Alkylrest, einem $C_{1-6}$-Alkoxyrest und einer zweiwertigen Gruppe Y:

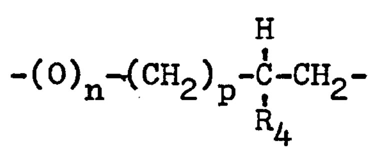

die an den Benzolkern über die Endgruppe $-(-O-)_n-$ gebunden ist und worin

n für O oder 1 steht,

p eine ganze Zahl zwischen 1 und 1O einschließlich bedeutet und $R_4$ ausgewählt ist unter einem Wasserstoffatom und einem $C_{1-4}$-Alkylrest, wobei einer der beiden Reste $R_1$ und $R_2$ notwendigerweise die Gruppe Y bedeutet,

$R_3$ für ein Wasserstoffatom, einen $C_{1-6}$-Alkylrest und einen $C_{1-6}$-Alkoxyrest steht,

$R_5$ und $R_6$, die gleich oder voneinander verschieden sind, einen $C_{1-8}$-Alkylrest bedeuten.

2. Polymeres gemäß Anspruch 19 dadurch gekennzeichnet, daß es außerdem zumindest eines der folgenden Merkmale aufweist:
   R bedeutet Methyl,
   B bedeutet Methyl,
   $R_1$ steht für H oder Y,
   $R_2$ bedeutet Y, Methoxy oder Butoxy,
   $R_3$ bedeutet H oder Methoxy,
   p = 1,
   $R_4$ bedeutet H oder Methyl,
   $R_5$ und $R_6$ sind Ethyl oder 2-Ethylhexyl,
   r beträgt zwischen 5 und 20 einschließlich,
   a beträgt zwischen 2 und 15 einschließlich,
   t + u beträgt zwischen 3 und 10 einschließlich.

3. Verfahren zur Herstellung eines Polymeren, wie in Anspruch 1 oder 2 definiert, dadurch gekennzeichnet, daß man eine Hydrosilylierungsreaktion in Gegenwart einer katalytisch wirksamen Menge eines Platinkatalysators, eines Polymeren mit SiH, ausgewählt unter denjenigen der Formel

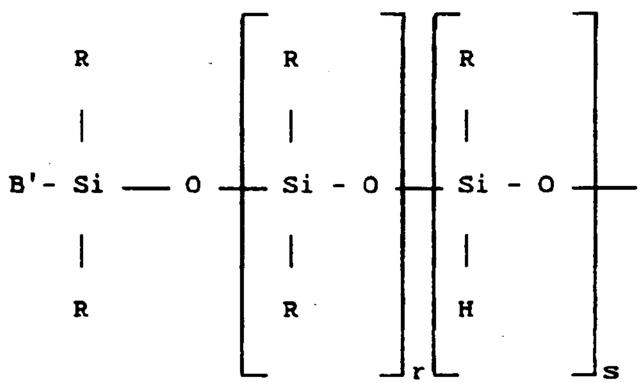

(4)

worin R, r und s die für die Formel (1) angegebene Bedeutung besitzen und die Reste B′, die gleich oder voneinander verschieden sind, unter den Resten R und einem Wasserstoffatom ausgewählt sind, und der Formel

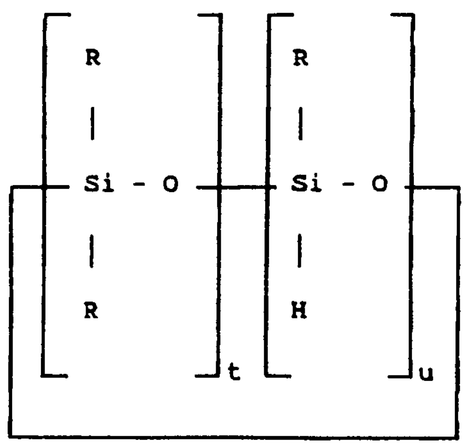

(5)

worin R, t und u die vorstehend für die Formel (2) angegebene Bedeutung besitzen, mit einem organischen Benzalmalonatderivat, ausgewählt unter denjenigen der Formel

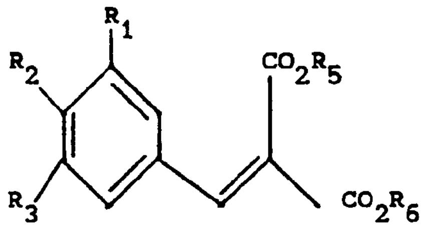

(I)

worin $R_1$, $R_2$, $R_3$, $R_5$ und $R_6$ die für die vorstehende Formel (3) angegebene Bedeutung besitzen, mit Ausnahme dessen, daß der Rest Y dann den einwertigen, ungesättigten homologen Rest Y' der Formel

$$-(O)_n-(CH_2)_p-\underset{R_4}{\underset{|}{C}} = CH_2$$

bedeutet, worin n, p und $R_4$ die für die vorstehende Formel (3) angegebene Bedeutung besitzen, durchführt.